Europäisches Patentamt

European Patent Office

Office européen des brevets

(11) Publication number: **0 339 778 B1**

## EUROPEAN PATENT SPECIFICATION

(45) Date of publication of patent specification: **15.09.93** (51) Int. Cl.5: **G06F 15/72**

(21) Application number: **89302452.1**

(22) Date of filing: **13.03.89**

(54) **Solid modelling.**

(30) Priority: **29.04.88 GB 8810301**

(43) Date of publication of application:
**02.11.89 Bulletin 89/44**

(45) Publication of the grant of the patent:
**15.09.93 Bulletin 93/37**

(84) Designated Contracting States:
**BE CH DE ES FR GB IT LI NL SE**

(56) References cited:

COMPUTERS & GRAPHICS vol. 11, no. 2, 1987, pages 113-120,Oxford, GB; K. N. RAMACHANDRAN NAIR et al.: "An approach to geometric modeling of solids bounded by sculptured surfaces"

COMPUTER VISION, GRAPHICS AND IMAGE PROCESSING; vol. 38, no. 1, 1987, pages 1-29, Duluth, MN, USA; J. PONCE et al.: "An Object Centered Hierarchical Representation for 3D Objects: The Prism Tree"

COMPUTER VISION, GRAPHICS AND IMAGE PROCESSING; vol. 40, no. 1,1987,pages 1-29, Duluth, MN, USA; M. POTMESIL:"Generating Octree Models of 3D Objectsfrom Their Sil-houettes in a Sequence of Images"

I.E.E.E. TRANSACTIONS ON PATTERN ANA-LYSIS AND MACHINE INTELLIGENCE vol. 10, no. 2,March 1988, pages 221-234, New York, NY, USA; S.E. XIE et al.: "CSG-EESI: A New Solid Representation Scheme and a Conver-sion Expert System"

(73) Proprietor: **International Business Machines Corporation**
**Old Orchard Road**
**Armonk, N.Y. 10504(US)**

(72) Inventor: **Todd, Stephen James**
**10 Christchurch Road**
**Winchester Hampshire(GB)**

(74) Representative: **Killgren, Neil Arthur**
**IBM United Kingdom Limited Intellectual Property Department Hursley Park**
**Winchester Hampshire SO21 2JN (GB)**

EP 0 339 778 B1

## Description

The present invention relates to solid modelling and is concerned with the generation of solid representations of objects.

In accordance with a solid modelling technique, commonly termed "Constructive Solid Geometry" or CSG, a three-dimensional (3-D) solid object is represented in a computer or the like by a Boolean function which returns a "true" if evaluated for a point within the object and returns a "false" otherwise. CSG techniques can be contrasted with boundary techniques where the surface of an object is defined rather than its volume.

Solid modelling systems based on CSG techniques have advantages over modelling systems based on boundary representations, or "B-reps" as they are usually known. Once an object has been defined in a solid modelling system, the function merely needs to be evaluated for a particular point in order to determine whether that point is inside or outside the solid. In the case of a B-rep system, it is much more difficult to determine whether a point is inside or outside an object as it is defined in terms of its boundary rather than its volume. For this reason, systems employing boundary techniques alone do not provide "solid modelling" of objects as meant within this document.

One of the major advantages of a B-rep system is that the generation of a representation of an object is relatively straightforward. It is essentially a matter of determining the surfaces that make up an object, the edges that bound the surfaces and the points that define the edges, and setting up a tree structure to link these bits of information. Although there is a lot of data involved for a large object and consequently a lot of individual steps in setting up the representation, the individual steps are straightforward, and are suitable for automation directly.

By comparison, the generation of a CSG-type representation, hereinafter termed a "solid representation", is much more difficult, particularly in the case of objects having complex, or free-form shapes. Indeed, it is the generation of an expression defining the volume of an object which forms the major disadvantage of solid modelling systems because of the need to define what is inside, and what is outside an object.

In a CSG system, composite objects are defined by combining functional representations of basic solid objects, or "primitives", such as halfspaces (ie. the space on one side of an infinite plane) and possibly also spheres, infinite cylinders and so on. The solid representation of a tetrahedron, for example, can be formed from an expression comprising set intersect operators combining four appropriate half-spaces. Each of the half-spaces is co-extensive with a respective one of the faces of the tetrahedron and is solid on the side corresponding to the inside of the tetrahedron. The CSG representations for other solid objects can also comprise other set operators such as the set union, symmetric difference and subtracting operators. With a set subtracting operator, for example, it is possible to define a composite object with a cut-out or hole. In this way hollow composite objects can be defined by subtracting one object from a larger one. Such composite objects are "solid" within the meaning of this document because the representation of the object can be evaluated for a particular point in space in order to determine whether it is inside or outside the object.

A CSG composite object formed from primitives is typically defined in terms of a structure which represents the logical expression for combining the primitives and comprises a linked set of nodes (eg. a tree structure) with the primitives being defined at first nodes (eg. leaf nodes of the tree), operators being defined at second or intermediate nodes to identify the combinatorial operations to be performed to construct the object from the primitives and/or sub-objects defined at lower-order nodes in the structure and the composite object being defined at an appropriate one of the operator nodes (eg the root of the tree).

It will be appreciated that in real life, the objects to be modelled are much more complicated than the tetrahedron mentioned above and that it has been very difficult to identify the primitives and set operators for correctly generating a solid representation of the object. As a consequence, the generation of a solid representation of an object has, to date, been a very time consuming operation which has required a high degree of user interaction.

The object of the present invention is to facilitate the generation of a functional representation of a solid object.

In accordance with a first aspect of the invention there is provided an object definition generator for a solid modelling system, the generator comprising object definition logic for forming a solid representation of an object in terms of the symmetric difference of construction solids which are based on respective surface areas of the object and are defined with respect to a common datum in object space, wherein the object definition logic comprises: primitive definition logic for defining, for each surface area, a primitive based on the surface area itself and construction primitives, each based on a respective edge of the surface area and the common datum in space; intersection logic for forming, for each surface area, a construction solid represented by the intersection of the primitive based on the surface area itself and the construction primitives based on the edges of that surface area and the common datum in space; and symmetric difference logic for forming the solid representation of the object in terms of the symmetric difference of the construction solids generated by the intersection logic.

By defining construction solids with respect to a common datum in space and forming the symmetric difference of the construction solids, a functional representation of the inside of the object is generated automatically. A solid representation will always be generated as long as the surface of the object is completely defined by the surface areas and may be generated even if the surface definition is incomplete. The symmetric difference operation automatically eliminates volumes outside the object as will be explained later. The theory on which this process is based is similar to that which some area-fill algorithms use (see for example the IBM Graphical Data Display Manager (GDDM) Base Programming Reference (Document No SC33-0101-4) at page 167). The symmetric difference operation is the set theory equivalent of the mathematical EX-OR function.

The invention enables the automatic generation of a solid representation of an object, irrespective of complexity, from a boundary, or surface representation of that object. Preferably therefore, the generator comprises means for initially defining the surface of an object in terms of said surface areas, although this means may alternatively be provided externally to the generator.

In a preferred embodiment of a generator in accordance with the invention, the means for initially defining the surface of the object are provided in the form of data storage for a data structure defining the surface thereof in terms of said surface areas. Thus the invention enables the generation of a solid representation of a solid object from an existing surface representation of the same object.

The means for initially defining the surface of the object may additionally, or alternatively, comprise preprocessing logic for processing externally supplied data about an object to generate a data structure defining the surface thereof in terms of said surface areas. Thus a generator in accordance with the invention may also facilitate the generation of a solid model from first principles by first generating a representation of the surface of an object and then producing a solid representation from that surface representation.

In accordance with CSG principles, the object definition logic of a particular embodiment of the invention to be described later forms a construction solid based on a surface area by representing the intersection of solid primitives based on the surface area itself and on one or more construction surfaces based on the boundary of the surface area and the common datum. The number and/or shape of the construction primitives for a surface area will depend on the form of that surface area. Also it will depend on what is used as the common datum in space.

The datum in object space could be, for example, a particular point in object space. In this way, the construction surfaces which are generated can be defined so as to incorporate the boundary of the surface area and the common point in space.

Alternatively, the datum in object space could be, for example, a particular direction in object space. In this way, the construction surfaces which are generated can be defined so as to incorporate the boundary of the surface area and to extend in the given direction. This is equivalent to choosing a datum point at infinity in that direction.

The generation of the construction surfaces is simplified if each said surface area is planar and bounded by a plurality of straight edges connected by discontinuities as the construction surfaces are then planar and the construction primitives are in the form of half-spaces.

The generation of the construction solids is further simplified if each surface area of the object is triangular. This ensures that the base of the pyramid is planar and has a convex boundary, and thus avoids the need to test for concave surface areas. In this case, if preprocessing logic is provided, it preferably comprises facetting logic for processing the externally defined data to form a definition of the boundary of the object in terms of triangular surface areas where the externally supplied data does not define the boundary in such terms. However, the invention is not limited to using surface areas having this form. The invention is applicable to objects having surface areas which are neither planar, nor triangular, although it should be understood that this complicates the processing of the object.

Accordingly, in the particular example of the generator to be described later, where the surface of the object to be modelled is defined in terms of triangular surface areas, the object definition logic comprises:

- primitive definition logic for defining, for each surface area, a primitive based on the surface area itself and three construction primitives, each based on a respective edge of the surface area and the common datum in space;
- intersection logic for forming, for each surface area, a construction solid represented by the intersection of the primitive based on the surface area itself and the three construction primitives based on the edges of that surface area and the common datum in space; and
- symmetric difference logic for forming the solid representation of the object in terms of the symmetric difference of the construction solids generated by the intersection logic.

Where the surface areas are triangular and the common datum is a particular point in space, each construction solid is a trapezoidal pyramid having the tip of the pyramid defined at the predetermined point and the base of the pyramid defined at the surface area on which it is based.

This also applies in principle if the common datum is a point at infinity in a particular direction (or that direction) so that the tip of the infinite pyramid will be at the point at infinity, although in this case, the pyramid will not converge due to the finite constraints of a real system.

Preferably, the object definition logic generates a data structure defining the solid representation of the object. This may be stored in object definition storage which may, or may not, form part of the generator.

A solid representation generated by an object definition generator in accordance with the present invention can be processed as a conventionally generated solid representation. Consequently, there is also provided a solid modelling system comprising an object definition generator according to the invention and object definition processing logic for processing the solid representation of the object generated by said generator.

In accordance with a second aspect of the invention there is provided a method of generating a solid representation of an object for a solid modelling system by forming the symmetric difference of construction solids which are based on respective surface areas of the object and are defined with respect to a common datum in object space, the method including defining, for each surface area, a primitive based on the surface area itself and construction primitives, each based on a respective edge of the surface area and the common datum in space; forming, for each surface area, a construction solid represented by the intersection of the primitive based on the surface area itself and the construction primitives based on the edges of that surface area and the common datum in space; and forming the solid representation of the object in terms of the symmetric difference of the construction solids generated by the intersection logic.

This method preferably comprises the initial step of defining the surface of the object in terms of said surface areas, whereby the generation of a solid model from first principles is facilitated.

A particular example of a solid modelling system is described in the following with reference to the accompanying drawings in which:

Figures 1A and 1B are an oblique and a plan view of an object used to explain the functioning of a solid modelling system in accordance with the present invention.

Figure 2 is a schematic illustration of a surface representation of the object shown in Figures 1A and 1B;

Figure 3 is schematic block diagram of a solid modelling system incorporating an object definition generator in accordance with the invention;

Figure 4 is a schematic illustration of part of a data structure for a solid representation of an object;

Figure 5 is a Venn diagram for explaining the operation of part of the object definition generator shown in Figure 3;

Figure 6 is a schematic diagram for explaining the operation of part of the object definition generator shown in Figure 3; and

Figure 7 is a schematic illustration of a further part of a data structure for a solid representation of an object.

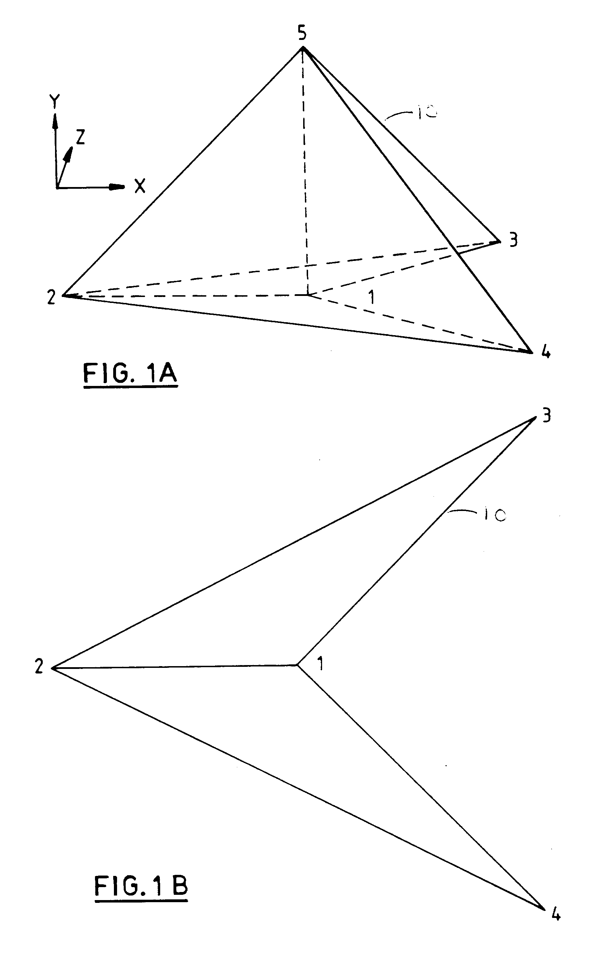

Figures 1A and 1B are an oblique and a plan view of an object 10 used to explain the functioning of an object definition generator in accordance with the present invention. As can be seen from the plan view the object has a base in the shape of an arrow head and the sides of the object 10 meet at an apex 5.

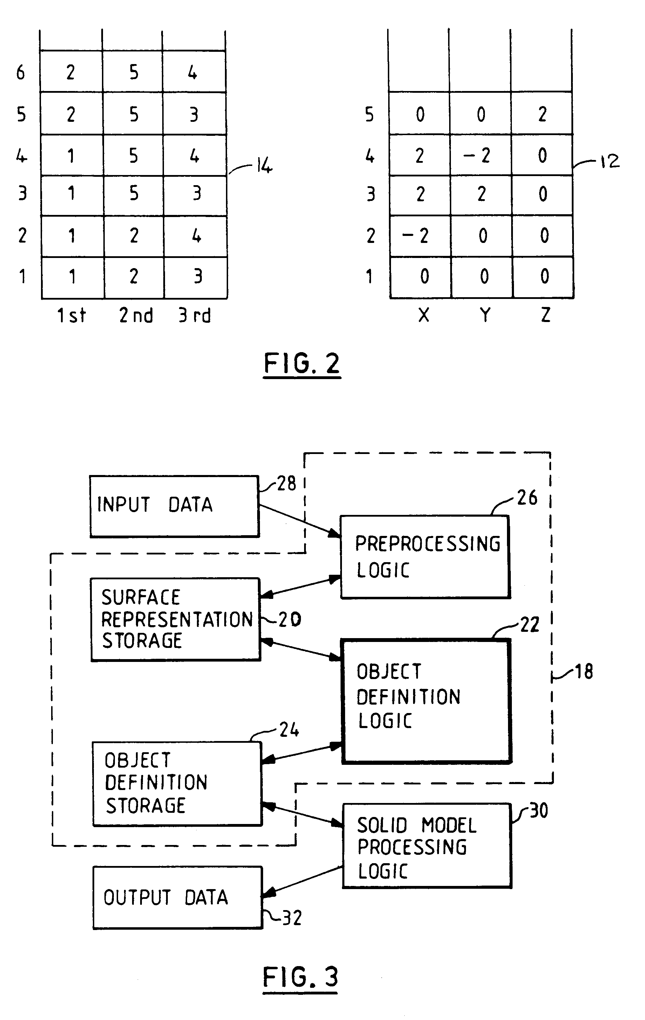

Figure 2 illustrates first and second sets of records in tabular form which together form a data structure representing the surface of the object 10. The first set of records (table 12) represents the coordinate positions in object space of the five vertices 1 - 5 of the object in the first five records (ie. the first five rows of table 12). The x, y and z coordinates are stored in first, second and third fields of the records (ie. in columns 1, 2 and 3, respectively, of table 12). The second set of records (table 14) defines six triangular surface areas which make up the boundary of the object 10, namely the triangular areas having the vertices 1,2,3; 1,2,4; 1,5,3; 1,5,4; 2,5,3 and 2,5,4. Each record (ie. each row in table 14) defines one surface area. The three vertices of the triangular areas are represented in the first, second and third fields (ie. in columns 1, 2 and 3, respectively, of table 14) by addresses to the appropriate records in the first set of records (ie. in the table 12) for the appropriate coordinates.

It will be noted that each of the surface areas of the object shown in Figure 1 is triangular. In the case of the base of the object, although that face of the object is arrow shaped, the boundary definition is split into two triangular surface areas. This is done because it simplifies the generation of a solid representation of the object.

Firstly, it provides a very compact representation of the surface areas because three points uniquely define a triangular surface area (assuming it is planar). In the case of four or more points, additional data about the lines joining those points is needed to correctly define the surface. For example, with the four points 1, 2, 3, 4, at the vertices of the arrow shaped base of the object, three different closed surfaces could be defined. The first is that shown with the points joined in the order 1, 4, 2, 3, 1. The second and third are with the points joined in the order 1, 3, 4, 2, 1 and 1, 2, 3, 4, 1, respectively. Thus, the use of triangular surface areas simplifies the representation of the boundary of the object.

In addition, the use of triangular, planar, surface areas simplifies the generation of construction solids. As the boundary of each surface area is convex there is no need to test for concave parts of the surface area boundaries and a valid construction solid having a simple solid representation can reliably be generated.

Algorithms are known for subdividing the surface of an object defined by an existing boundary representation of an object to form planar triangular surface areas. This process of subdividing the boundary representation of an object is commonly called facetting and the resulting surface areas are commonly called facets. In the case of an object having a surface not formed from planar faces, the initial step in facetting the object may comprise approximating the surface of the object with planar n-sided facets and subsequently subdividing the n-sided facets into triangular facets. The details of the process of forming triangular facets can be in accordance with any suitable method, as will be apparent to one versed in the art, and do not form part of the invention.

Figure 3 is a functional block diagram giving an overview of the logic and storage of a solid modelling system including an object definition generator 18 in accordance with the invention. The data structure for the surface representation illustrated in Figure 2 is stored in Surface Representation Storage (SRS) 20. Object definition logic (ODL) 22 accesses the SRS 20 for generating a solid representation of the object to be modelled from the surface representation of that object. The ODL 22 stores the resulting solid model of the object in object definition storage (ODS) 24.

The object definition generator illustrated in Figure 3 also includes preprocessing logic (PPL) 26 for processing input data 28 relating to the object to be modelled in order to generate the surface representation of the model for storage in the SRS 20. The input data can be captured in any conventional manner by means of a keyboard, by direct digitisation of an object or a scale drawing of that object or by any other suitable means and processed into a suitable form by the preprocessing logic. Alternatively, the input data may take the form of a file of preprocessed data for storage directly in the SRS 20. The preprocessing logic can also contain logic for modifying a boundary representation which is not in the form illustrated in Figure 2, for example for facetting the surface of the object as described above.

The solid model, or object definition processing logic (ODPL) 30 shown in Figure 3 forms part of the solid modelling system into which the object definition generator 18 is incorporated. The ODPL is for processing the solid representation of the object produced by the ODL 22 to provide any desired result in accordance with CSG principles. The ODPL can, for example, comprise logic for generating a 2-D image of the object as described in GB-A-2,194,715.

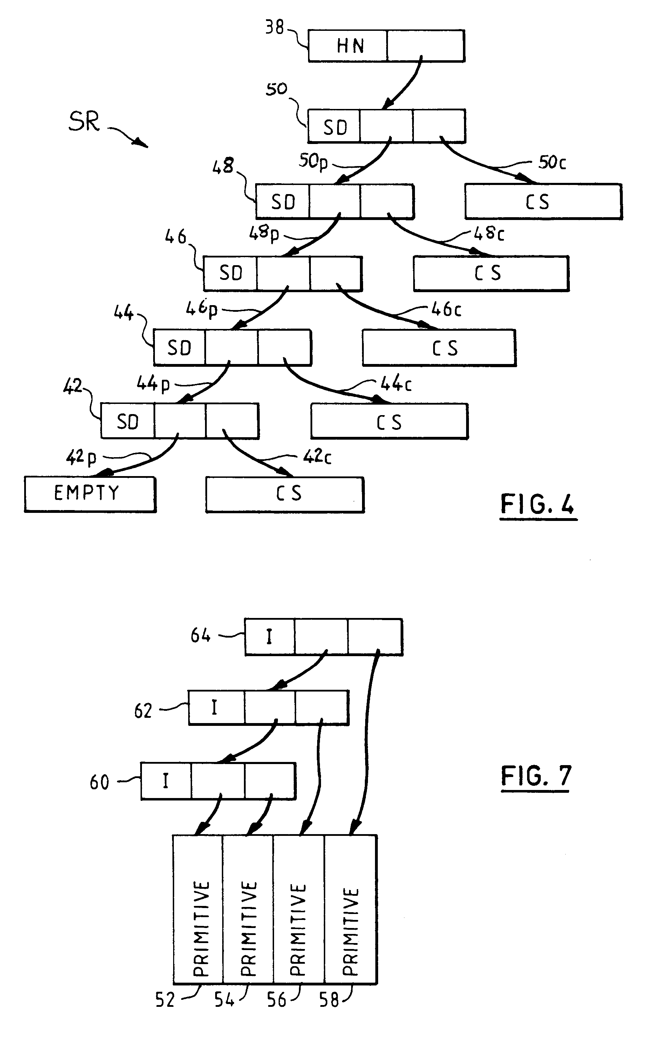

The example of object definition generator illustrated in Figure 3 and described in the following assumes that the surface representation of the object to be modelled is based on triangular facets as described with respect to Figure 2. List 1 below illustrates an overview of the operation of the ODL 22 shown in Figure 3 to form the symmetric difference of construction solids based on the surface areas of the object. In Figure 4, a data structure is illustrated for the solid representation of the object to be modelled.

    1.1. Set solid representation (SR) of the object to Empty

    1.2. Select first surface area of object as current surface

    1.3. Define construction solid (CS) based on the current surface area

    1.4. Update SR by forming symmetric difference of previous SR with CS

    1.5. If further surface area then select next surface area as current surface area and go to 1.3, else end.

LIST 1 - SYMMETRIC DIFFERENCE LOGIC

In step 1.1, a data structure for the solid representation is established in the ODS by creating a head node HN for the data structure which points to a primitive node defining the logical state EMPTY. In other words, the object is initially defined as being empty space.

In step 1.2 the ODL 22 accesses the first row of the second table 14 to determine which of the points in the first table 12 form the vertices of the first surface areas of the object.

In step 1.3, the ODL generates a solid representation of a construction solid based on that surface area with the surface area as is explained in more detail with reference to List 2 below.

In step 1.4, the ODL updates the solid representation (Figure 4) of the object by introducing an intermediate node (42, 44, 46, 48, 50) defining the symmetric difference SD of the previous solid representation of the object (42P, 44P, 46P, 48P, 50P) and the solid representation of the construction solid (42C, 44C, 46C, 48C, 50C) generated in step 1.3.

Each of the blocks shown in Figure 4 represents a node in a tree-like data structure. Each of the nodes comprises a first field containing a definition of the nodes (eg. that it is a symmetric difference node SD) and one or more fields which form pointers to dependent nodes (eg to the previous solid representation (42P, etc) or to the definition of a construction solid (42C, etc). The tree shown in Figure 4 is rather unbalanced in that the sub-tree pointed to by the left hand pointer is longer than that pointed to by the right hand sub-tree for many of the nodes. The symmetric difference logic could be arranged to produce balanced sub-trees. As will be explained later with reference to List 2 and Figure 7, each of the nodes defining a construction solid in fact contains a sub-tree.

In step 1.5, if there is a further surface area to be processed, then the ODL accesses the next row in the first table and causes control to be passed back to step 3. This means that each of the surface areas of the surface representation of the object is treated in turn and that a construction solid based on each surface area is generated and is logically combined by symmetric difference operators with the other construction solids so generated.

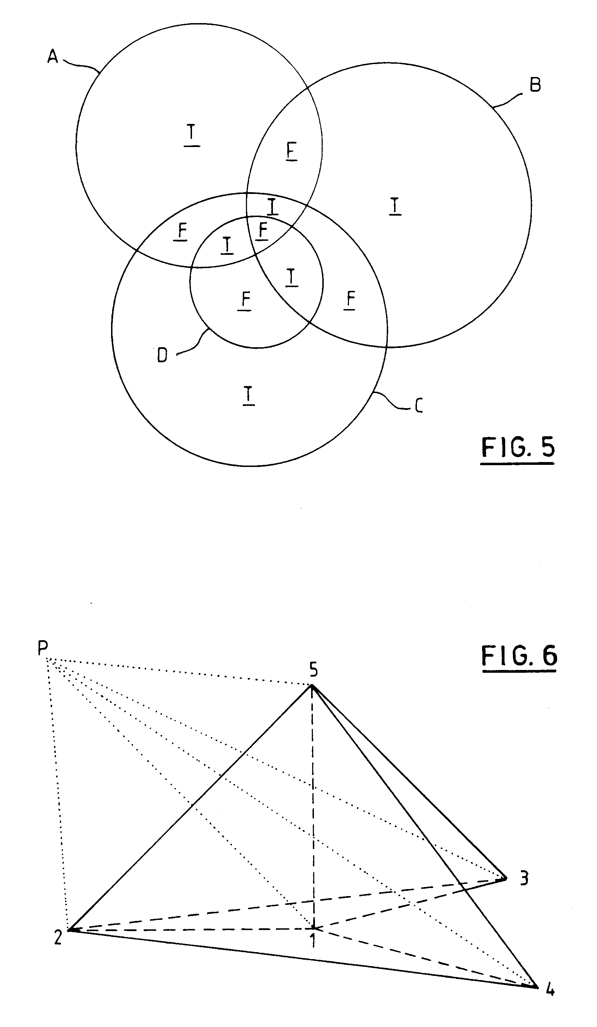

The "symmetric difference" operator is the set theoretical equivalent of the exclusive-or function in mathematics. Thus the symmetric difference of two volumes is true where the volumes exist but do not coexist. This is illustrated by a Venn diagram in Figure 5 for the primitives A, B, C and D. The areas for which the symmetric difference of A, B, C and D is true are labelled T. These are the areas where an odd number of the primitives coexist, zero being considered for this purpose as an even number. All other areas are false and are labelled F.

The effect of a symmetric difference operator is also illustrated in Figure 6 for the object shown in Figure 1. Figure 6 illustrates the object of Figure 1 and superimposed thereon, the edges of six tetrahedrons, each based on a respective one of the triangular surface areas of the object and defined with respect to a common datum point P in object space. Logic for defining the tetrahedrons is described later with reference to Lists 2 and 3. The six tetrahedrons have the vertices vertices P,1,2,3; P,1,2,4; P,1,5,3; P,1,5,4; P,2,5,3 and P,2,5,4, respectively. P is assumed to have the coordinates (-2, 2, + 2). Visual inspection of Figure 6 should enable the reader to confirm that the interior of the solid object having the vertices 1, 2, 3, 4 and 5 is defined by those regions of space where an odd number of tetrahedrons exist or co-exist. Regions where an even number of tetrahedrons co-exist or no tetrahedrons exist, are outside the object.

List 2 below illustrates intersection logic for forming a construction solid (step 1.3 of List 1).

2.1. Take the vertices defining the current surface area and define a half-space for current surface area with respect to a predetermined datum in space.

2.2. Take two vertices defining a first edge of current surface area and define a half-space including this edge and predetermined datum with respect to the remaining vertex of the surface area and form intersection with the half-space generated in step 2.1.

2.3. Take two vertices defining a second edge of current surface area and define a half-space including this edge and predetermined datum with respect to the remaining vertex of the surface area and form the intersection with the result of step 2.2.

2.4. Take two vertices defining the third edge of current surface area and define a half-space including this edge and predetermined datum with respect to the remaining vertex of the surface area and form the intersection with the result of step 2.3.

## LIST 2 - INTERSECTION LOGIC

In step 2.1 the ODL accesses the definitions of the vertices in the first table 12 which are identified by the content of the surface area definition currently addressed in the second table 14. The ODL then computes a functional representation of a half-space based on this surface area. The actual computation to be performed will depend on the form of the datum used as will be explained below with reference to primitive definition logic illustrated in Lists 3 to 5. The half-space defined here forms one of the primitive solids, or primitives, for the solid representation of the object and the data defining the half-space is stored in a primitive node 52, Figure 7.

In step 2.2 the ODL selects two of the vertices for the current surface area which define a first of the three edges of the triangular surface area. The ODL then computes a definition of a half-space which includes this edge and the common datum as will be explained below with reference to Lists 3 to 5. This half-space forms a second primitive, the data for which will be sorted at a second primitive node 56. The ODL updates the solid representation (Figure 7) of the construction solid linking the first two primitive nodes using a node 60 defining the set intersection operator.

In steps 2.3 and 2.4 the process of step 2.2 is repeated for the second and third edges, respectively, of the triangular surface area to generate third and fourth primitive nodes, 56 and 58, which are linked into the representation for the construction solid using intersection nodes 62 and 64 as shown in Figure 7, which is an illustration of the resulting solid representation of the construction solid.

As mentioned above with regard to step 2.1, the actual computation to be performed in order to compute a functional representation of a half-space based on a surface area depends on the form of the datum used. The logic for forming a half-space based on a set of vertices of triangular surface area is described in List 3 for the case where the common datum in object space is a point P in that space.

The input data required by the primitive definition logic set out in the List 3 are the coordinates C of three points on the boundary of the half-space J, K and L and the coordinates C of a point T within the half-space. When defining a half-space based on the surface area itself (ie. step 2.1 in Table 2), the vertices of the triangular surface area form the points J, K and L and the common point in object space forms the point T. When defining a half-space based on one of the edges of the surface area (ie. steps 2.2, 2.3, or 2.4 in List 2), the vertices of the triangular surface area form the points J, K and T and the common point in space forms the point L.

    3.1. Define 2 vectors using the coordinates of the points J, K and L:

        Vector JK = C(J) - C(K)

        Vector JL = C(J) - C(L)

    3.2. Define a normal to the plane:

        Normal = Cross product of Vector JK and Vector JL

    3.3. Define offset of the plane from the origin:

        Offset (d) = Dot product of Normal and point J

    3.4. Define half-space for the plane:

        If dot product of Normal and point T is less than d, then

          Half-space := ( Nx, Ny, Nz,-d) else

          Half-space := (-Nx,-Ny,-Nz, d),

where Nx, Ny, and Nz are the vector constants in the X, Y and Z directions respectively, and d is the offset from the origin.

LIST 3 - PRIMITIVE DEFINITION LOGIC FOR DATUM = POINT

The principle of operation of the primitive definition logic in List 3 is that, given the coordinates of three points J, K and L on a plane, a mathematical representation of the plane can be defined in terms of the normal thereto and the offset of the plane from the origin of the coordinate system. The normal can be generated by forming the cross product of two vectors from one of the vertices to each of the other vertices. The offset from the origin can be computed by the dot product of the normal and the coordinates of one point on the plane.

In step 3.1 first and second vectors are generated from the three points given which are to lie on the plane for the half-space to be generated. The first vector, Vector JK, is generated by separately subtracting the x, y and z coordinate values of the first point "J" from the corresponding values of the second point K and separately storing the results. The second vector, Vector JL, is calculated and stored in the same way but using the coordinates of the first point J and the third point L respectively. The stored values for each vector represent the gradient of that vector with respect to the x, y and z axes respectively.

In step 3.2 the normal to the surface is generated by forming the cross product of the first and second vectors. The cross product is defined as:

$$((JKy{*}JLz)-(JKz{*}JLy) \quad , \quad (JKz{*}JLx)-(JKx{*}JLz) \quad , \quad (JKx{*}JLy)-(JKy{*}JLx))$$

where JKx, JKy, and JKz are the vector constants in the x, y and z directions, respectively of the vector JK, and JLx, JLy, and JLz are the vector constants in the x, y and z directions, respectively of the vector JL.

In step 3.3 the offset from the origin is computed as the the dot product of the vector and a point on the plane. The dot product is defined as:

$$(Nx * Wx) + (Ny * Wy) + (Nz * Wz)$$

where Nx, Ny and Nz are the vector constants in the x, y and z directions, respectively, of the normal N and Wx, Wy and Wz are the x, y and z coordinates, respectively, of a point W. The dot product gives the offset of the plane for any point W on the plane.

Given the equation for a plane which is co-extensive with one of the faces of a tetrahedron and the coordinates of a point on the solid side of the face, it is possible to define a half-space which can be used to form a solid representation of the tetrahedron.

This is done in step 3.4. Firstly, a test is made to determine on which side of the plane the remaining point of the tetrahedron is to be found by forming the dot product of the normal and the fourth point of the tetrahedron is greater than or less than the dot product of the normal and a point on the plane. The half-space is then defined by the x, y and z gradients of the normal to the plane and the offset of that plane form the origin as illustrated in step 3.4 in dependence on the outcome of the test. This definition forms the functional definition of a solid primitive which is stored in the ODS 24 at a primitive node in the data structure representing the solid object.

It should be noted at this stage that if the dot product of the normal and the point T is equal to d, this means that the point T is on the plane as well and the tetrahedron is flat (ie. the common point in space is on the plane defined by the three vertices of the triangular surface area). In such a case, the construction solid for that surface area does not contribute to the definition of the solid representation of the object and can be replaced by a primitive defining EMPTY. Thus, if extra logic is provided for testing for a flat construction solid, for example before step 2.1 in List 2, processing time can be saved and the solid representation for the object simplified in such cases. It should be noted that although this extra logic would simplify the definition of the construction solid, it is not essential to the operation of the ODL 22.

It is because, in some cases, a plane coextensive with a surface area may include the datum point and consequently not contribute to the solid representation of an object, that it is sometimes possible to create a valid solid representation of a solid object even if the surface representation of that object in incomplete. This assumes that the correct choice of datum in space is made.

By means of the intersection logic illustrated in List 2, it will be appreciated that four such primitive nodes are defined and linked together as shown in Figure 7 by nodes defining the intersection of those primitives for each tetrahedron. The intersection of the primitives defines that region of space which is occupied by all of the primitives, ie. the region of space within the pyramid.

List 3 illustrates primitive definition logic for the generation of a half-space where the datum is a predetermined point in space. However, the mathematics of generating the construction solid can be simplified if the point is moved to infinity in some direction. This has the advantage that the construction surfaces do not converge, given the finite constraints of a real system, and the predetermined datum can be that direction. The logic for forming a half-space based on a set vertices of triangular surface area is described with reference to Lists 4 and 5 for the case where the predetermined datum is a given direction in space.

The input data required by the logic illustrated in Lists 4 and 5 are the coordinates C of two points on the boundary of the half-space J and K, a definition of a vector, "Vector V", for the given direction in which the boundary extends and the Coordinates C of a point T within the half-space.

The logic set out in List 4 is used for generating a half-space based on the surface area itself (ie step 2.1 in List 2). This logic is essentially the same as the logic of List 3, but takes as its input parameters, the vertices of the triangular surface area as the points J, K and L and the common vector V instead of a common point in space.

4.1. Define 2 vectors using the coordinates of the points J, K and L:
    Vector JK = C(J) - C(K)
    Vector JL = C(J) - C(L)
4.2. Define a normal to the plane:
    Normal = Cross product of Vector JK and Vector JL
4.3. Define offset of the plane from the origin:
    Offset (d) = Dot product of Normal and point J
4.4. Define half-space for the plane:
    If dot product of Normal and vector V is less than zero, then
    Half-space := ( Nx, Ny, Nz,-d) else
    Half-space := (-Nx,-Ny,-Nz, d),
where Nx, Ny, and Nz are the vector constants in the X, Y and Z directions respectively, and d is the offset from the origin.

## LIST 4 - PRIMITIVE DEFINITION LOGIC FOR PRIMITIVE BASED ON SURFACE AREA ITSELF WHERE DATUM = VECTOR

It can be seen that the logic illustrated in List 4 only differs from that illustrated in List 3 in that the input parameters are different and that the test at step 4.4 is different. The formation of the dot product of the normal and the vector V is used to determine which side of the plane should be solid. If the normal and the vector are orthogonal (ie. the result of the dot product is zero), then the half-space direction vector lies within the plane. The result of this is that the construction solid for the surface area in question is flat and does not contribute to the solid representation of the object. As pointed out with regard to List 3, if suitable extra logic is provided to test for flat construction solids, then a primitive defining EMPTY can be inserted in the solid representation of the object for that construction solid.

The logic set out in List 5 is used for generating a half-space based on one of the edges of the surface area (ie steps 2.2, 2.3, or 2.4 in Table 2) and a direction in object space, in which case the points J, K and T are the vertices of the triangular surface area and Vector V is the predetermined direction in space.

5.1. Define a vector using the coordinates of the
    Vector JK = C(J) - C(K)
5.2. Define a normal to the plane:
    Normal = Cross product of Vector JK and Vector V
5.3. Define normal offset the plane from the origin:

Offset (d) = Dot product of Normal and point J

5.4. Define half-space for the plane:

If dot product of normal and point T is less than d, then

Half-space : = ( Nx, Ny, Nz,-d) else

Half-space : = (-Nx,-Ny,-Nz, d),

where Nx, Ny, and Nz are the vector constants in the X, Y and Z directions respectively, and d is the offset from the origin.

LIST 5 - PRIMITIVE DEFINITION LOGIC FOR PRIMITIVE BASED ON EDGE OF SURFACE AREA WHERE DATUM = VECTOR

It can be seen that the steps 5.1 to 5.4 correspond generally to those of List 3 with the exception that there is no need to calculate a second vector in step 5.1 as Vector V is used as the second vector in step 5.2.

The use of datum in the form of a direction, as defined by a vector, has the advantage that the construction surfaces of the various construction solids do not all converge on a point within finite space as is the case where a point in finite space is taken as the datum. In the latter case, there can be potential problems in resolving the construction surfaces in the vicinity of the point, due to the finite resolution of real systems, which are avoided by using a vector.

The solid representation of the object which is defined by the resulting data structure will contain many construction primitives which are required for the definition of the solid object, but which do not contribute directly to the surface of the object itself. This situation is not unique to a solid representation as generated by the object definition generator in accordance with the present invention. Indeed, the resulting data structure is of a conventional CSG form.

Conventional CSG subdivision logic for processing a solid representation of an object to generate a spatial representation of that object (eg. a 2-D image) is able to eliminate primitives or parts of primitives which are not to be rendered in such a spatial representation. An example of the generation of a 2-D image is described in GB-A-2,194,715. Such conventional logic will also mean that a line as shown in Figure 1, splitting the base into two triangular surface areas need not appear on a resulting image, the post processing logic taking into account that the base of the object is planar.

In order to increase the efficiency of processing the solid representation of the object, it is desirable, but not essential, to label the construction primitives. This can be done by providing a flag in the primitive nodes which identifies the primitive as a construction primitive, or not, as the case may be. This flag can be set at any time during the processing of the solid representation, both during its creation and afterwards, when it is determined that a primitive is a construction primitive. The labelling of construction primitives can increase the efficiency of processing of a solid representation of an object because it allows a region of space, or voxel, to be described as either 'EMPTY' or 'FULL' when it is determined that no non-construction surfaces are contained within that voxel. Conventional CSG subdivision logic keeps a count of the number of primitives within a voxel and ceases processing within a voxel when the count reaches zero. By additionally keeping a second count, of the non-construction primitives, processing can be stopped when the second count reduces to zero.

Existing techniques for simplifying the solid representation produced by the object definition logic may also be employed before and/or during processing of that solid representation to produce a spatial representation of the object. Such techniques involve the identification of repeated primitives and/or complements of primitives to simplify the data structure defining the solid representation. Also, techniques for identifying redundant primitives may be used, such as are described in the Applicant's copending UK patent application (IBM Docket UK9-87-002).

An object definition generator in accordance with the invention, and a solid modelling system incorporating the same, can be implemented by suitably programming a general purpose computer, such as a personal computer or a host processing system. In such cases the logic described with reference to Lists 1 to 5 can be provided by appropriate programming code and the storage elements such as the SRS and ODL can be provided by suitably configuring the system memory. The data structures defined could, in such cases be managed by the operating system and/or the programming language. In this way the generation of the nodes and the pointers would be transparent. A particularly advantageous implementation is possible where the logic is provided by programming the computer in a language which allows recursive procedural calls with the definition of local variables within procedures as well as global variables. In such a case the logic illustrated in each of the lists 1 to 5 could be implemented as a separate procedure.

The present invention is not, however, limited to such an implementation and may be implemented as a special purpose processor or as a special purpose adapter for use with a general purpose computer.

In such a case, one or more of the storage elements mentioned could be provided by units of discrete storage. Similarly, the logic may well be provided wholly or in part by special purpose logic.

It should be noted that the separation of the logic into the separate blocks of Figure 2 and the Lists 1 to 5 is for ease of explanation only and that some or all of the logic could be arranged otherwise in other examples of an object definition generator in accordance with the invention. In addition, the operations performed in some of the blocks of logic may be performed instead or additionally in other of the blocks of logic.

Although the object definition generator is illustrated in Figure 2 as forming part of a solid modelling system incorporating object definition processing logic, this need not be the case. An object definition generator could be implemented as a stand alone system for generating a solid representation of an object for subsequent processing by a solid modelling system.

Also, as mentioned earlier, in other examples of a solid modelling system in accordance with the invention, the surface representation of the object stored in the SRS need not be based on planar triangular surfaces areas. However, in this case the generation and processing of the construction primitives and solids will be more complex.

The present invention provides a solid modelling system which enables, for the first time, the automatic generation of solid representations of solid objects, irrespective of their complexity, which can be processed in accordance with conventional CSG techniques from a surface representation of that object. As a boundary, or surface, representation of an object can be generated relatively easily by digitising a real world example of the object or engineering drawings of the object, the invention facilitates greatly the generation of a solid representation of that object.

## Claims

1. An object definition generator for a solid modelling system, the generator comprising object definition logic (22) for forming a solid representation of an object in terms of the symmetric difference of construction solids which are based on respective surface areas of the object and are defined with respect to a common datum in object space, wherein the object definition logic comprises:

   - primitive definition logic for defining, for each surface area, a primitive based on the surface area itself and construction primitives, each based on a respective edge of the surface area and the common datum in space;

   - intersection logic for forming, for each surface area, a construction solid represented by the intersection of the primitive based on the surface area itself and the construction primitives based on the edges of that surface area and the common datum in space; and

   - symmetric difference logic for forming the solid representation of the object in terms of the symmetric difference of the construction solids generated by the intersection logic.

2. A generator as claimed in claim 1 comprising means for initially defining the surface of an object in terms of said surface areas.

3. A generator as claimed in claim 2 wherein the means for initially defining the surface of the object comprises data storage (20) for a data structure defining the surface thereof in terms of said surface areas.

4. A generator as claimed in claim 2 or claim 3 wherein the means for initially defining the surface of the object comprises preprocessing logic (26) for processing externally supplied data about an object to generate a data structure defining the surface thereof in terms of said surface areas.

5. A generator as claimed in any one of the preceding claims wherein the datum in object space is a point in object space.

6. A generator as claimed in any one of claims 1 to 4 wherein the datum in object space is a direction in object space.

7. A generator as claimed in any one of the preceding claims wherein each said surface area is planar and bounded by a plurality of edges connected by discontinuities.

8. A generator as claimed in claim 7 wherein each said surface area is triangular.

9. A generator as claimed in any one of the preceding claims wherein the object definition logic (22) generates a data structure defining the solid representation of the object.

10. A generator as claimed in claim 9 comprising object definition storage (24) for storing the data structure defining the solid representation of the object generated by the object definition logic.

**11.** A solid modelling system comprising an object definition generator (18) as claimed in any of the preceding claims and object definition processing logic for processing the solid representation of the object generated by said generator.

**12.** A method of generating a solid representation of an object for a solid modelling system by forming the symmetric difference of construction solids which are based on respective surface areas of the object and are defined with respect to a common datum in object space, the method including defining, for each surface area, a primitive based on the surface area itself and construction primitives, each based on a respective edge of the surface area and the common datum in space;

forming, for each surface area, a construction solid represented by the intersection of the primitive based on the surface area itself and the construction primitives based on the edges of that surface area and the common datum in space; and

forming the solid representation of the object in terms of the symmetric difference of the construction solids generated by the intersection logic.

**13.** A method as claimed in claim 12 comprising the initial step of defining the surface of the object in terms of said surface areas.

**Patentansprüche**

**1.** Ein Objektdefinitionsgenerator für ein dreidimensionales Modellierungssystem, wobei der Generator eine Objektdefinitionslogik (22) zum Bilden der dreidimensionalen Darstellung eines Objekts als Symmetriedifferenz der Konstruktionsfestkörper enthält, die sich auf die entsprechenden Oberflächenbereiche des Objekts gründen und definiert sind im Hinblick auf ein gemeinsames Datum im Objektraum, wobei die Objektdefinitionslogik umfaßt:
- Eine Darstellungselementdefinitionslogik zum Definieren eines Darstellungselements für jeden Oberflächenbereich auf der Grundlage des Oberflächenbereichs selbst, und Konstruktions-Darstellungselemente, jeweils gegründet auf eine entsprechende Kante des Oberflächenbereichs und auf das gemeinsame Datum im Raum;
- eine Durchdringungslogik zum Ausbilden eines Konstruktionskörpers für jeden Oberflächenbereich, der dargestellt wird durch die Durchdringung des Darstellungselements aufgrund des Oberflächenbereichs selbst mit dem Konstruktionsdarstellungselement auf der Grundlage der Kanten dieses Oberflächenbereichs und des gemeinsamen Datums im Raum; und
- eine Symmetriedifferenzlogik zum Ausbilden der dreidimensionalen Darstellung des Objekts als Symmetriedifferenz der von der Durchdringungslogik generierten Konstruktionskörper.

**2.** Generator gemäß Anspruch 1, der Mittel zur anfänglichen Definition der Oberfläche eines Objekts in Form der Oberflächenbereiche aufweist.

**3.** Generator gemäß Anspruch 2, in dem die Mittel zur anfänglichen Definition der Oberfläche eines Objekts Datenspeicher (20) für eine Datenstruktur beinhalten, die die Oberfläche desselben in der Form dieser Oberflächenbereiche definiert.

**4.** Generator gemäß Anspruch 2 oder 3, in dem die Mittel zur anfänglichen Definition der Oberfläche eines Objekts eine vorverarbeitende Logik (26) zur Verarbeitung von außen zugeführter Daten über ein Objekt beinhalten, um eine Datenstruktur zu generieren, die dessen Oberfläche in der Form der Oberflächenbereiche definiert.

**5.** Generator gemäß einem beliebigen der obigen Ansprüche, in dem das Datum im Objektraum ein Punkt im Objektraum ist.

**6.** Generator gemäß einem beliebigen der Ansprüche 1 bis 4, in dem das Datum im Objektraum eine Richtung im Objektraum ist.

**7.** Generator gemäß einem beliebigen der obigen Ansprüche, in dem jeder dieser Oberflächenbereiche planar und von einer Vielzahl von Kanten begrenzt wird, die durch Unstetigkeitsstellen verbunden sind.

**8.** Generator gemäß Anspruch 7, in dem jeder Oberflächenbereich dreieckig ist.

**9.** Generator gemäß einem beliebigen der vorstehenden Ansprüche, in dem die Objektdefinitionslogik (22) eine Datenstruktur generiert, die die dreidimensionale Darstellung des Objekts definiert.

**10.** Generator gemäß Anspruch 9, der einen Objektdefinitionsspeicher (24) zum Abspeichern der Datenstruktur aufweist, die die dreidimensionale Darstellung des Objekts definiert, das von der Objektdefinitionslogik generiert wurde.

11. Ein Festkörpermodellierungssystem, das einen Objektdefinitionsgenerator (18) gemäß einem beliebigen der obigen Ansprüche und eine Objektdefinitionslogik zur Verarbeitung der dreidimensionalen Darstellung des von diesem Generator generierten Objekts aufweist.

12. Verfahren zum Generieren einer dreidimensionalen Darstellung eines Objekts für ein Festkörper-Modellierungssystem durch Bilden der Symmetriedifferenz der Konstruktionsfestkörper, die auf den entsprechenden Oberflächenbereichen des Objekts gegründet sind und im Hinblick auf ein gemeinsames Datum im Objektraum definiert sind, wobei dieses Verfahren das Definieren eines Darstellungselements für jeden Oberflächenbereich auf der Grundlage des Oberflächenbereichs selbst, sowie von Konstruktionselementen, die jeweils auf einer entsprechenden Kante des Oberflächenbereichs und dem gemeinsamen Datum im Raum beruhen, beinhaltet;
für jeden Oberflächenbereich Bilden eines Konstruktionsfestkörpers, der durch die Durchdringung der Konstruktionselemente auf der Grundlage des Oberflächenbereichs selbst, und der Konstruktionselemente auf der Grundlage der Kanten dieses Oberflächenbereichs, und das gemeinsame Datum im Raum dargestellt wird; und
Bilden der dreidimensionalen Darstellung des Objekts in der Form der Symmetriedifferenz der Konstruktionsfestkörper, die durch die Durchdringungslogik generiert werden.

13. Verfahren gemäß Anspruch 12, enthaltend den ersten Schritt der Definition der Oberfläche eines Objekts in der Form dieser Oberflächenbereiche.

**Revendications**

1. Générateur de définition d'objet pour un système de modélisation d'un objet solide, le générateur comprenant une logique de définition d'objet (22) pour former une représentation solide, ou pleine, d'un objet en termes de la différence symétrique de solides de construction qui sont basés sur des régions de surface respectives de l'objet et qui sont définis par rapport à une référence commune dans l'espace objet, dans lequel la logique de définition d'objet comprend :

une logique de définition de primitive pour définir, pour chaque région de surface, une primitive basée sur la région de surface elle-même et des primitives de construction, basées chacune sur un bord rezpectif de la région de surface et sur la référence commune dans l'espace ;

une logique d'intersection pour former, pour chaque région de surface, un solide de construction représenté par l'intersection de la primitive basée sur la région de surface elle-même et des primitives de construction basées sur les bords de cette région de surface et la référence commune dans l'espace ; et

une logique de différence symétrique pour former la représentation solide de l'objet en termes de la différence symétrique des solides de construction engendrés par la logique d'intersection.

2. Générateur suivant la revendication 1, comprenant des moyens pour définir initialement la surface d'un objet en termes des dites régions de surface.

3. Générateur suivant la revendication 2, dans lequel les moyens pour définir initialement la surface de l'objet comprennent une mémoire de données (20) pour une structure de données définissant sa surface en termes desdites régions de surface.

4. Générateur suivant la revendication 2 ou la revendication 3, dans lequel les moyens pour définir initialement la surface de l'objet comprennent une logique de prétraitement (26) pour le traitement de données fournies extérieurement concernant un objet, afin d'engendrer une structure de données définissant sa surface en termes de dites régions de surface.

5. Générateur suivant l'une quelconque des revendications précédentes, dans lequel la référence dans l'espace objet est un point dans l'espace objet.

6. Générateur suivant l'une quelconque des revendications 1 à 4, dans lequel la référence dans l'espace objet est une direction dans l'espace objet.

7. Générateur suivant l'une quelconque des revendications précédentes, dans lequel chaque dite région de surface est plane et délimitée par une pluralité de bords connectés par des discontinuités.

8. Générateur suivant la revendication 7, dans lequel chaque dite région de surface est triangulaire.

**9.** Générateur suivant l'une quelconque des revendications précédentes, dans lequel la logique de définition d'objet (22) engendre une structure de données définissant la représentation solide de l'objet.

**10.** Générateur suivant la revendication 9, comprenant une mémoire de définition d'objet (24) pour stocker la structure de données définissant la représentation solide de l'objet engendrée par la logique de définition d'objet.

**11.** Système de modélisation d'un objet solide, comprenant un générateur de définition d'objet (18) suivant l'une quelconque des revendications précédentes, et une logique de traitement de définition d'objet pour traiter la représentation solide de l'objet engendrée par ledit générateur.

**12.** Méthode de génération d'une représentation solide d'un objet pour un système de modélisation d'objet solide par formation de la différence symétrique de solides de construction qui sont basés sur des régions de surface respectives de l'objet et qui sont définis par rapport à une référence commune dans l'espace objet, la méthode comprenant :

la définition, pour chaque région de surface, d'une primitive basée sur la région de surface elle-même et de primitives de construction basées chacune sur un bord respectif de la région de surface et la référence commune dans l'espace ;

la formation, pour chaque région de surface, d'un solide de construction représenté par l'intersection de la primitive basée sur la région de surface elle-même et des primitives de construction basées sur les bords de cette région de surface et la référence commune dans l'espace ; et

la formation de la représentation solide de l'objet en termes de la différence symétrique des solides de construction engendrés par la logique d'intersection.

**13.** Méthode suivant la revendication 12, comprenant l'étape initiale de définition de la surface de l'objet en termes de dites régions de surface.

FIG. 1A

FIG. 1 B

14

| | 1st | 2nd | 3rd |
|---|---|---|---|
| 6 | 2 | 5 | 4 |
| 5 | 2 | 5 | 3 |
| 4 | 1 | 5 | 4 |
| 3 | 1 | 5 | 3 |
| 2 | 1 | 2 | 4 |
| 1 | 1 | 2 | 3 |

~14

| | X | Y | Z |
|---|---|---|---|
| 5 | 0 | 0 | 2 |
| 4 | 2 | −2 | 0 |
| 3 | 2 | 2 | 0 |
| 2 | −2 | 0 | 0 |
| 1 | 0 | 0 | 0 |

~12

## FIG. 2

INPUT DATA ~28

PREPROCESSING LOGIC ~26

SURFACE REPRESENTATION STORAGE ~20

OBJECT DEFINITION LOGIC ~22

~18

OBJECT DEFINITION STORAGE ~24

SOLID MODEL PROCESSING LOGIC ~30

OUTPUT DATA ~32

## FIG. 3

**FIG. 4**

**FIG. 7**

FIG. 5

FIG. 6